(19) Europäisches Patentamt
European Patent Office
Office européen des brevets

(11) **EP 2 991 944 B1**

(12) **FASCICULE DE BREVET EUROPEEN**

(45) Date de publication et mention
de la délivrance du brevet:
**08.01.2020   Bulletin 2020/02**

(21) Numéro de dépôt: **14726182.0**

(22) Date de dépôt: **28.04.2014**

(51) Int Cl.:
***C03C 17/36*** *(2006.01)*

(86) Numéro de dépôt international:
**PCT/FR2014/051013**

(87) Numéro de publication internationale:
**WO 2014/177798 (06.11.2014 Gazette 2014/45)**

(54) **SUBSTRAT MUNI D'UN EMPILEMENT A PROPRIETES THERMIQUES**

SUBSTRAT MIT EINEM STAPEL MIT WÄRMEEIGENSCHAFTEN

SUBSTRATE PROVIDED WITH A STACK HAVING THERMAL PROPERTIES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.04.2013   FR 1353972**

(43) Date de publication de la demande:
**09.03.2016   Bulletin 2016/10**

(73) Titulaire: **Saint-Gobain Glass France
92400 Courbevoie (FR)**

(72) Inventeurs:
• **GEORGES, Benoît
Dubai (AE)**
• **LAURENT, Stéphane
F-45000 Orleans (FR)**
• **LORENZZI, Jean-Carlos
F-75011 Paris (FR)**

(74) Mandataire: **Saint-Gobain Recherche
Département Propriété Industrielle
39 Quai Lucien Lefranc
93300 Aubervilliers (FR)**

(56) Documents cités:
**WO-A1-2012/140098      US-A- 5 595 825
US-A1- 2006 257 670      US-A1- 2007 081 228
US-A1- 2007 116 967      US-A1- 2007 204 949
US-A1- 2012 177 900      US-A1- 2012 219 821**

**Description**

L'invention concerne un substrat transparent revêtu d'un empilement de couches minces comprenant plusieurs couches fonctionnelles pouvant agir sur le rayonnement solaire et/ou le rayonnement infrarouge de grande longueur d'onde. L'invention concerne également les vitrages comprenant ces substrats ainsi que l'utilisation de tels substrats pour fabriquer des vitrages d'isolation thermique et/ou de protection solaire.

Ces vitrages peuvent être destinés aussi bien à équiper les bâtiments que les véhicules, en vue notamment de diminuer l'effort de climatisation et/ou d'empêcher une surchauffe excessive, vitrages dits « de contrôle solaire » et/ou diminuer la quantité d'énergie dissipée vers l'extérieur, vitrages dits « bas émissifs » entraînée par l'importance toujours croissante des surfaces vitrées dans les bâtiments et les habitacles de véhicules.

Des vitrages comprenant des substrats transparents revêtus d'un empilement de couches minces comprenant au moins trois couches fonctionnelles métalliques sont connus. Ces empilements sont généralement obtenus par une succession de dépôts effectués par une technique utilisant le vide comme la pulvérisation cathodique éventuellement assistée par champ magnétique.

L'utilisation de substrat à base d'empilement comprenant au moins trois couches métalliques permet d'optimiser la protection solaire des vitrages les incorporant, ce qui peut se traduire par une diminution du facteur solaire (g) et une augmentation de la sélectivité (s). Selon l'invention, on entend par :

- facteur solaire « g », le rapport entre l'énergie totale entrant dans le local à travers le vitrage et l'énergie solaire incidente,
- sélectivité « s », le rapport entre la transmission lumineuse et le facteur solaire TL/g.

Dans ce type d'empilement, chaque couche fonctionnelle se trouve disposée entre deux revêtements antireflets comportant chacun en général plusieurs couches antireflets ou diélectriques qui sont chacune en un matériau du type nitrure et notamment nitrure de silicium ou d'aluminium et/ou du type oxyde. Du point de vue optique, le but de ces revêtements qui encadrent la couche fonctionnelle est « d'antirefléter » cette couche fonctionnelle.

Le choix de l'utilisation d'empilement à trois couches métalliques influe sur la transmission lumineuse des substrats et/ou des vitrages incorporant lesdits empilements. Selon les climats des pays où doivent être incorporés ces vitrages, les performances en termes de transmission lumineuse et de facteur solaire devant être performances en termes de transmission lumineuse et de facteur solaire devant être obtenues peuvent varier dans une certaine gamme. La transmission lumineuse doit être suffisamment faible pour supprimer l'éblouissement et suffisamment élevée pour que la diminution de la quantité de lumière pénétrant à l'intérieur de l'espace délimité par ledit vitrage ne rende pas obligatoire l'utilisation de la lumière artificielle. Par exemple, les vitrages isolants présentent une sélectivité élevée d'environ 2 sont avantageusement utilisés comme vitrages destinés à être exposés à des forts ensoleillements.

Cependant, des substrats ou vitrages comprenant des empilements à trois couches fonctionnelles métalliques et une transmission lumineuse de l'ordre de 50 % ne donnent pas entière satisfaction et présentent notamment les inconvénients suivants :

- un aspect esthétique peu satisfaisant avec notamment des couleurs en réflexion intérieure, en réflexion extérieure et en transmission inesthétiques, et/ou
- des niveaux de réflexion élevés gênant l'observateur notamment lorsque le substrat est utilisé pour délimiter deux espaces dans lesquels les niveaux d'éclairement sont différents tels qu'une pièce éclairée pendant la nuit, et/ou
- des performances de contrôle solaire peu satisfaisantes telles qu'une sélectivité faible.

Une réflexion extérieure mais surtout intérieure élevée présente pour inconvénient, lorsque les substrats sont utilisés comme vitrage pour fenêtre de bâtiment, de renvoyer des reflets nets, à la manière de miroirs, réduisant la visibilité à travers le vitrage.

Un compromis doit donc être trouvé entre les performances optiques et thermiques, la transparence et l'aspect esthétique.

Le document US2007/0081228 concerne des revêtements de film fin pour vitrage multiple et autres substrats. En particulier, il concerne des revêtements bas-émissifs qui réfléchissent les radiations infra-rouge et décrit des revêtements incluant trois portions de films à réflexion IR qui peuvent comprendre de l'argent. Ce document décrit également les méthodes et équipements pour déposer de tels revêtements.

Pour les pays à climats chauds où la dépense d'énergie en climatisation est prépondérante, g doit être faible. Selon l'invention, on cherche donc à minimiser le facteur solaire et à augmenter la sélectivité, tout en gardant une transmission lumineuse adaptée pour permettre une bonne isolation et une bonne vision.

La demande de brevet EP 0 645 352 divulgue par exemple un substrat transparent comprenant un empilement de couche minces comportant notamment au moins trois couches d'argent séparées par des couches de matériaux diélectriques.

Les épaisseurs des couches d'argent augmentent en fonction de l'éloignement du substrat. Les vitrages comprenant ces substrats, bien que présentant un aspect esthétique agréable, ne présentent pas une sélectivité supérieure à 2. Or, il est extrêmement difficile de conserver à la fois une bonne sélectivité et des couleurs en transmission et en réflexion esthétiquement acceptables avec notamment un aspect du vitrage vu de l'intérieur de couleur neutre.

Le but de l'invention est donc de pallier ces inconvénients en mettant au point un substrat comprenant un empilement comportant au moins trois couches à propriétés de réflexion dans l'infra-rouge, notamment métalliques, et qui présente une haute sélectivité, c'est-à-dire un rapport TL/g le plus élevé possible pour une valeur de TL donnée, tout en garantissant un aspect, notamment en réflexion extérieure, en réflexion intérieure et en transmission qui soit agréable à l'œil, ceci que le substrat soit utilisé en tant que vitrage monolithique, incorporé dans un vitrage multiple isolant du type double-vitrage, ou même dans un vitrage feuilleté. Ces propriétés sont de préférence obtenues après un (ou des) traitement(s) thermique(s) à haute température du type bombage et/ou trempe et/ou recuit. L'aspect agréable à l'œil se traduit par l'obtention de couleurs en réflexion, tant de l'extérieur que de l'intérieur, plus neutre, dans les bleu-vert et qui en outre varie peu suivant l'angle d'observation.

L'invention a pour objet un substrat transparent 10 comprenant un empilement de couches minces selon la revendication 1. Il comporte successivement à partir du substrat une alternance de trois couches métalliques fonctionnelles 40, 80, 120, notamment de couches fonctionnelles à base d'argent ou d'alliage métallique contenant de l'argent, et de quatre revêtements antireflets 20, 60, 100, 140, chaque revêtement antireflet comportant au moins une couche diélectrique, de manière à ce que chaque couche métallique fonctionnelle 40, 80, 120 soit disposée entre deux revêtements antireflets 20, 60, 100, 140. Les épaisseurs des couches métalliques fonctionnelles 40, 80, 120 en partant du substrat augmentent en fonction de l'éloignement du substrat. La seconde couche métallique fonctionnelle 80 est directement au contact d'une couche de blocage, appelée deuxième couche de blocage, choisie parmi une sous-couche de blocage et une surcouche de blocage, respectivement appelées deuxième sous-couche de blocage et deuxième surcouche de blocage. La deuxième sous-couche de blocage et/ou la deuxième surcouche de blocage présente une épaisseur supérieure à 1 nm.

L'association de la distribution croissante en épaisseur des couches fonctionnelles métalliques à propriétés de réflexion dans l'infra-rouge et la concentration des couches de blocage au contact de la deuxième couche fonctionnelle permet d'obtenir des vitrages à sélectivité très élevée présentant notamment un rapport TL/g supérieur à 2, de préférence supérieur à 2,2. En modulant les épaisseurs des couches fonctionnelles et des couches de blocage, la transparence du vitrage peut être contrôlée de façon à obtenir des valeurs de TL de l'ordre de 50 %, gamme adaptée tout particulièrement pour les vitrages destinés à être utilisés dans des régions à fort ensoleillement. Mais l'avantage majeur de l'invention est que les performances satisfaisantes en termes de protection solaire ne s'opèrent pas au détriment de l'aspect visuel du substrat qui présente notamment des couleurs en transmission, en réflexion extérieure et en réflexion intérieure esthétiquement acceptables ainsi que des valeurs de réflexion intérieure suffisamment faibles pour limiter les réflexions miroirs.

En effet, le substrat revêtu de l'empilement de couches selon l'invention, utilisé comme vitrage monolithique ou incorporé dans un vitrage multiple type double-vitrage, présente une coloration en réflexion intérieure, en réflexion extérieure et en transmission agréable et douce, dans la gamme des bleus ou bleus-verts (valeurs de longueur d'onde dominante de l'ordre de 470 à 500 nanomètres). Par « couleur dans le bleu-vert » au sens de la présente invention, il faut comprendre que dans le système de mesure de couleur La*b*, a* est compris entre -12 et -2, de préférence entre -10 et -4 et b* est compris entre -12 et 2, de préférence entre -10 et 1.

De plus, cet aspect visuel reste quasiment inchangé quel que soit l'angle d'incidence avec lequel le vitrage est observé (incidence normale et sous angle). Cela signifie qu'un spectateur n'a pas l'impression d'une inhomogénéité significative de teinte ou d'aspect.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Au sens de la présente invention, les qualifications « première », « deuxième », « troisième » et « quatrième » pour les couches fonctionnelles ou les revêtements antireflets sont définies en partant du substrat porteur de l'empilement et en se référant aux couches ou revêtements de même fonction. Par exemple, la couche fonctionnelle la plus proche du substrat est la première couche fonctionnelle, la suivante en s'éloignant du substrat est la deuxième couche fonctionnelle, etc.

La caractéristique selon laquelle les épaisseurs des couches métalliques fonctionnelles 40, 80, 120 en partant du substrat augmentent signifie que l'épaisseur de la troisième couche métallique fonctionnelle 120 est supérieure à celle de la seconde couche métallique fonctionnelle 80 et en ce que l'épaisseur de la seconde couche métallique fonctionnelle est supérieure à celle de la première couche métallique fonctionnelle 40. L'augmentation d'épaisseur entre deux couches fonctionnelles successives est par ordre de préférence croissant, supérieure à 2 nm, supérieure à 3 nm, supérieure à 4 nm.

Sauf mention contraire, les épaisseurs évoquées dans le présent document sont des épaisseurs physiques, ou réelles (et non pas des épaisseurs optiques).

Selon des modes de réalisation avantageux de l'inventions, les couches métalliques fonctionnelles satisfont une ou plusieurs des conditions suivantes :

- les trois couches métalliques fonctionnelles correspondent à la première, la deuxième, et la troisième couche fonctionnelle métallique définies en partant du substrat,
- le rapport de l'épaisseur d'une couche fonctionnelle métallique sur l'épaisseur de la précédente est supérieur ou égale à 1,10,
- le rapport de l'épaisseur de la deuxième couche métallique 80 sur l'épaisseur de la première couche métallique fonctionnelle 40 est compris entre 1,50 et 2,20, de préférence entre 1,80 et 2,20 en incluant ces valeurs,
- le rapport de l'épaisseur de la troisième couche métallique 120 sur l'épaisseur de la deuxième couche métallique fonctionnelle 80 est compris entre 1,10 et 1,60, de préférence 1,10 et 1,55 en incluant ces valeurs,
- l'épaisseur de chaque couche fonctionnelle est comprise entre 6 et 26 nm, de préférence entre 6 et 24 nm en incluant ces valeurs,
- l'épaisseur de la première couche métallique fonctionnelle 40 est par ordre de préférence croissant comprise de 7 à 12 nm, de 8 à 10 nm,
- l'épaisseur de la seconde couche métallique fonctionnelle 80 est par ordre de préférence croissant comprise de 14 à 18 nm, de 15 à 17 nm,
- l'épaisseur de la troisième couche métallique fonctionnelle 120 est par ordre de préférence croissant comprise de 18 à 24 nm, de 19 à 23 nm,
- l'épaisseur totale des couches métalliques fonctionnelles 40, 80, 120 est comprise entre 30 et 60 nm en incluant ces valeurs, de préférence entre 40 et 50 nm.

Le rapport de la moyenne de l'épaisseur des deuxième et troisième couches métalliques fonctionnelles sur l'épaisseur de la première couche métallique fonctionnelle est compris entre 1,50 et 2,50 en incluant ces valeurs. Le respect de ces rapports concourt à l'obtention d'une couleur en réflexion extérieure dans le bleu-vert.

Ces plages d'épaisseur pour les couches métalliques fonctionnelles sont les plages pour lesquelles les meilleurs résultats sont obtenus pour une transmission lumineuse en double vitrage d'environ 50 %, une réflexion lumineuse basse et facteur solaire plus bas permettant d'obtenir une sélectivité élevée avec en plus une couleur en réflexion, tant de l'extérieur que de l'intérieur, ainsi qu'en transmission neutre, dans les bleu-vert.

Selon l'invention, une couche de blocage peut être intercalée entre un ou chaque revêtement antireflet et une couche fonctionnelle adjacente. Une couche de blocage disposée sous une couche fonctionnelle en direction du substrat est appelée sous-couche de blocage « UB ». Une couche de blocage disposée sur la couche fonctionnelle à l'opposé du substrat est appelée surcouche de blocage « OB ». Les couches de blocages ont traditionnellement pour fonction de protéger les couches fonctionnelles d'une éventuelle dégradation lors du dépôt du revêtement antireflet supérieur et lors d'un éventuel traitement thermique à haute température, du type recuit, bombage et/ou trempe.

Concernant les couches de blocage situées au-contact d'une couche fonctionnelle, les qualifications « première », « deuxième » et « troisième », sont définies en partant du substrat porteur de l'empilement et en se référant à la qualification « première », « deuxième » et « troisième » de la couche fonctionnelle au contact de laquelle les couches de blocage se situent. Par exemple, la deuxième couche fonctionnelle peut comporter une ou deux deuxièmes couches de blocage choisies parmi une deuxième sous-couche de blocage et une deuxième surcouche de blocage.

Le demandeur a découvert de manière surprenante que les résultats avantageux du substrat de l'invention sont obtenus notamment grâce à l'association d'épaisseurs croissantes en partant du substrat pour les couches fonctionnelles et de la concentration en épaisseur de la ou des couches de blocage autour de la deuxième couche fonctionnelle.

Selon l'invention, l'épaisseur de la première couche de blocage s'entend de la somme des épaisseurs de la première sous-couche de blocage et de la première surcouche de blocage si deux couches de blocages sont au contact de la première couche fonctionnelle. De même, l'épaisseur de la deuxième couche de blocage s'entend de la somme des épaisseurs de la deuxième sous-couche de blocage et de la deuxième surcouche de blocage si deux couches de blocages sont au contact de la deuxième couche fonctionnelle. Enfin, l'épaisseur de la troisième couche de blocage s'entend de la somme des épaisseurs de la troisième sous-couche de blocage et de la troisième surcouche de blocage si deux couches de blocages sont au contact de la troisième couche fonctionnelle.

Le substrat selon l'invention comprend au moins une deuxième couche de blocage située au contact de la deuxième couche métallique fonctionnelle 80 et éventuellement au moins une couche de blocage choisie parmi :

- une première couche de blocage située au contact de la première couche métallique fonctionnelle 40,
- une troisième couche de blocage située au contact de la troisième couche métallique fonctionnelle 120,

les première, deuxième et/ou troisième couches de blocage présentant respectivement des épaisseurs CB1, CB2, CB3 satisfaisant l'équation suivante: CB1 + CB3 < 1,10 CB2 avec au moins l'épaisseur CB2 non nulle.

Le substrat selon l'invention comprend au moins une couche de blocage choisie parmi :

- une première sous-couche de blocage UB1 située au-dessous et au contact de la première couche métallique fonctionnelle 40,
- une première surcouche de blocage OB1 située au-dessus et au contact de la première couche métallique fonctionnelle 40,
- une deuxième sous-couche de blocage UB2 située au-dessous et au contact de la deuxième couche métallique fonctionnelle 80,
- une deuxième surcouche de blocage OB2 située au-dessus et au contact de la deuxième couche métallique fonctionnelle 80,
- une troisième sous-couche de blocage UB3 située au-dessous et au contact de la troisième couche métallique fonctionnelle 120,
- une troisième surcouche de blocage OB3 située au-dessus et au contact de la troisième couche métallique fonctionnelle 120,

présentant respectivement des épaisseurs UB1, OB1, UB2, OB2, UB3, OB3 satisfaisant l'équation suivante : (UB1 + OB1) + (UB3 +OB3) < 1,10 (UB2 + OB2) avec au moins l'épaisseur UB2 ou OB2 non nulle.

D'après la définition de l'invention, les épaisseurs CB1, UB1, OB1, CB3, UB3, OB3, CB2, UB2 et OB2 satisfont les équations suivantes :

- CB1 égale UB1 + OB1,
- CB3 égale UB3 +OB3 et
- CB2 égale UB2 + OB2.

Selon des modes de réalisation avantageux de l'inventions, la ou les couches de blocage satisfont une ou plusieurs des conditions suivantes :

- chaque couche métallique fonctionnelle (40, 80, 120) est au contact d'au moins une couche de blocage,
- chaque couche métallique fonctionnelle 40, 80, 120 est au contact d'une seule couche de blocage,
- la ou les couches de blocage sont situées au contact et au-dessus d'une couche métallique fonctionnelle et correspondent à des surcouches de blocage « OB »,
- chaque couche métallique fonctionnelle 40, 80, 120 est au contact d'une surcouche de blocage dénommée en fonction de la position par rapport au substrat, première surcouche de blocage, deuxième surcouche de blocage et troisième surcouche de blocage,
- la ou les couches de blocage sont situées au contact et au-dessous d'une couche métallique fonctionnelle et correspondent à des sous-couches de blocage « UB »,
- chaque couche métallique fonctionnelle 40, 80, 120 est au contact d'une sous-couche de blocage dénommée en fonction de la position par rapport au substrat, première, deuxième et troisième sous-couche de blocage,
- les première, deuxième et troisième surcouches de blocage présentent respectivement des épaisseurs OB1, OB2 et OB3 satisfaisant l'équation suivante :

$$OB1 + OB3 < 1,10\ OB2,$$

- les première, deuxième et troisième sous-couches de blocage présentent respectivement des épaisseurs UB1, UB2 et UB3 satisfaisant l'équation suivante :

$$UB1 + UB3 < 1,10\ UB2,$$

- le rapport de l'épaisseur de la deuxième couche de blocage CB2 sur l'épaisseur de la première couche de blocage CB1 est supérieur à 1,10, de préférence compris entre 1,10 et 10, et mieux compris entre 1,10 et 2,00, de préférence entre 1,40 et 1,70 en incluant ces valeurs,
- le rapport de l'épaisseur de la deuxième couche de blocage CB2 sur l'épaisseur de la troisième couche de blocage CB3 est supérieur à 1,10, de préférence compris entre 2,00 et 10, de préférence entre 2,90 et 3,20 en incluant ces valeurs,
- le rapport de l'épaisseur de la deuxième surcouche de blocage OB2 sur l'épaisseur de la première surcouche de blocage OB1 est supérieur à 1,10, de préférence compris entre 1,10 et 10,00, et mieux compris entre 1,10 et 2,00, de préférence entre 1,40 et 1,70 en incluant ces valeurs,
- le rapport de l'épaisseur de la deuxième surcouche de blocage OB2 sur l'épaisseur de la troisième surcouche de blocage OB3 est supérieur à 1,10, de préférence compris entre 2,00 et 10,00, de préférence entre 2,90 et 3,20 en incluant ces valeurs,
- le rapport de l'épaisseur de la deuxième sous-couche de blocage UB2 sur l'épaisseur de la première sous-couche de blocage UB1 est supérieur à 1,10, de préférence compris entre 1,10 et 10,00, et mieux compris entre 1,10 et 2,00, de préférence entre 1,40 et 1,70 en incluant ces valeurs,
- le rapport de l'épaisseur de la deuxième sous-couche de blocage UB2 sur l'épaisseur de la troisième sous-couche de blocage UB3 est supérieur à 1,10, de préférence compris entre 2,00 et 10, de préférence entre 2,90 et 3,20 en incluant ces valeurs,
- l'épaisseur de chaque sous-couche et surcouche de blocage est d'au moins 0,5 nm, de préférence d'au moins 0,8 nm,
- l'épaisseur de la première couche de blocage CB1 est par ordre de préférence croissant comprise de 1 à 2,5 nm, de 1,5 à 2 nm,
- l'épaisseur de la première surcouche de blocage OB1 50 est par ordre de préférence croissant comprise de 1 à 2,5 nm, de 1,5 à 2 nm,
- l'épaisseur de la première sous-couche de blocage UB1 est par ordre de préférence croissant comprise de 1 à 2,5 nm, de 1,5 à 2 nm,
- l'épaisseur de la seconde couche de blocage CB2 est par ordre de préférence croissant comprise de 1,5 à 3,5 nm, de 2 à 3 nm,
- l'épaisseur de la seconde surcouche de blocage OB2 90 est par ordre de préférence croissant comprise de 1,5 à 3,5 nm, de 2 à 3 nm,
- l'épaisseur de la seconde sous-couche de blocage UB2 est par ordre de préférence croissant comprise de 1,5 à 3,5 nm, de 2 à 3 nm,
- l'épaisseur de la troisième couche de blocage CB3 est par ordre de préférence croissant comprise de 0,5 à 1,5 nm, de 0,5 à 1 nm,
- l'épaisseur de la troisième surcouche de blocage OB3 130 est par ordre de préférence croissant comprise de 0,5 à 1,5 nm, de 0,5 à 1 nm,
- l'épaisseur de la troisième sous-couche de blocage UB3 est par ordre de préférence croissant comprise de 0,5 à 1,5 nm, de 0,5 à 1 nm,
- l'épaisseur totale des couches de blocages 50, 90, 130 est comprise entre 3 et 7 nm en incluant ces valeurs, de préférence entre 3,5 et 5 nm, et mieux 4 et 5 nm.

Selon des modes de réalisation avantageux de l'invention, les couches de blocage sont choisies parmi les métaux et alliages métalliques, les nitrures et les oxynitures. Les couches de blocages sont donc choisies parmi les couches métalliques à base d'un métal ou d'un alliage métallique, les couches de nitrure métallique et les couches d'oxynitrure métallique, de préférence, d'un ou plusieurs éléments choisis parmi le titane, le nickel, le chrome et le niobium telles que Ti, TiN, Nb, NbN, Ni, NiN, Cr, CrN, NiCr, NiCrN.

Bien que ces couches de blocage soient déposées sous forme métallique, nitrurée ou oxynitrurée, il est évident que ces couches peuvent subir une oxydation partielle ou totale selon leur épaisseur, par exemple, au moment du dépôt de la couche suivante.

Selon des modes de réalisation avantageux de l'invention, les revêtements antireflets satisfont une ou plusieurs des conditions suivantes :

- les revêtements antireflets correspondant au premier, au deuxième et au troisième revêtement antireflet définis en partant du substrat ont une épaisseur sensiblement identique,
- les revêtements antireflets, de préférence dans les empilements trempés, correspondant au premier, au deuxième et au troisième revêtement antireflet définis en partant du substrat présentent un rapport de l'épaisseur d'un revêtement sur l'épaisseur du précédent qui est compris entre 0,90 et 1,20 en incluant ces valeurs,
- l'épaisseur du premier revêtement antireflet 20 est par ordre de préférence croissant comprise de 30 à 75 nm, de 40 à 70 nm, de 50 à 60 nm,

EP 2 991 944 B1

- l'épaisseur du second revêtement antireflet 60 est par ordre de préférence croissant comprise de 40 à 80 nm, de 50 à 70 nm, de 60 à 65 nm,
- l'épaisseur du troisième revêtement diélectrique 100 est par ordre de préférence croissant comprise de 40 à 80 nm, de 50 à 70 nm, de 60 à 65 nm,
- l'épaisseur du quatrième revêtement antireflet 140 est par ordre de préférence croissant comprise de 15 à 40 nm, de 20 à 30 nm,
- les revêtements antireflets comprennent au moins une couche diélectrique à base d'oxyde ou de nitrure d'un ou plusieurs éléments choisis parmi le silicium, l'aluminium, l'étain, le zinc,
- au moins un revêtement antireflet comprend au moins une couche diélectrique à fonction barrière,
- chaque revêtement antireflet comprend au moins une couche diélectrique à fonction barrière,
- les couches diélectriques à fonction barrière sont de préférence à base de composés de silicium choisis parmi les oxydes tels que SiO$_2$, les nitrures de silicium Si$_3$N$_4$ et les oxynitures SiO$_x$N$_y$, éventuellement dopé à l'aide d'au moins un autre élément, comme l'aluminium.
- au moins un revêtement antireflet comprend au moins une couche diélectrique à fonction stabilisante,
- chaque revêtement antireflet comprend au moins une couche diélectrique à fonction stabilisante,
- les couches diélectriques à fonction stabilisante sont de préférence à base d'oxyde cristallisé, notamment à base d'oxyde de zinc, éventuellement dopé à l'aide d'au moins un autre élément, comme l'aluminium,
- chaque couche fonctionnelle est au-dessus d'un revêtement antireflet dont la couche supérieure est une couche diélectrique à fonction stabilisante, de préférence à base d'oxyde de zinc et/ou en-dessous d'un revêtement antireflet dont la couche inférieure est une couche diélectrique à fonction stabilisante.

Les revêtements antireflets situés chacun entre deux couches métalliques fonctionnelles, c'est-à-dire les deuxième et troisième revêtements antireflets, présentent des épaisseurs optiques assez proches. Chaque revêtement antireflet situé entre deux couches métalliques fonctionnelles comprend une ou plusieurs couches diélectriques.

De préférence, chaque revêtement antireflet est constitué uniquement d'une ou de plusieurs couches diélectriques. De préférence, il n'y a donc pas de couche absorbante dans les revêtements antireflets afin de ne pas diminuer la transmission lumineuse.

Les empilements de l'invention peuvent comprendre des couches diélectriques à fonction barrière.

On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les matériaux constitutifs de la couche diélectrique à fonction barrière ne doivent donc pas subir de modification chimique ou structurelle à haute température qui entraînerait une modification de leurs propriétés optiques. La ou les couches à fonction barrières sont de préférence également choisies en un matériau apte à faire barrière au matériau constitutif de la couche fonctionnelle. Les couches diélectriques à fonction barrière permettent donc à l'empilement de subir sans évolution optique trop significative des traitements thermiques du type recuit, trempe ou bombage.

Les couches diélectriques à fonction barrière sont de préférence à base de composés de silicium choisis parmi les oxydes tels que SiO$_2$, les nitrures de silicium Si$_3$N$_4$ et les oxynitures SiO$_x$N$_y$, éventuellement dopé à l'aide d'au moins un autre élément, comme l'aluminium. Les couches diélectriques à fonction barrière peuvent être aussi à base de nitrures d'aluminium AlN. La présence des couches diélectriques à fonction barrière est particulièrement avantageuse pour les empilements de couches minces à bomber/tremper.

Les empilements de l'invention peuvent comprendre des couches diélectriques à fonction stabilisante. Au sens de l'invention, « stabilisante » signifie que l'on sélectionne la nature de la couche de façon à stabiliser l'interface entre la couche fonctionnelle et cette couche. Cette stabilisation conduit à renforcer l'adhérence de la couche fonctionnelle aux couches qui l'entourent, et de fait elle va s'opposer à la migration de son matériau constitutif.

La couche diélectrique à fonction stabilisante est de préférence à base d'oxyde choisi parmi l'oxyde de zinc, l'oxyde d'étain, l'oxyde de zirconium ou un mélange d'au moins deux d'entre eux. La ou les couches diélectriques à fonction stabilisante sont de préférence des couches d'oxyde de zinc.

La dernière couche de chaque revêtement antireflet sous-jacent à une couche fonctionnelle (40, 80, 120) est une couche diélectrique à fonction stabilisante (28, 68, 108). En effet, il est avantageux d'avoir une couche à fonction stabilisante, par exemple, à base d'oxyde de zinc en-dessous d'une couche fonctionnelle, car elle facilite l'adhésion et la cristallisation de la couche fonctionnelle à base d'argent et augmente sa qualité et sa stabilité à haute température.

Il est également avantageux d'avoir une couche fonction stabilisante, par exemple, à base d'oxyde de zinc au-dessus d'une couche fonctionnelle, pour en augmenter l'adhésion et s'opposer de manière optimale à la diffusion du côté de l'empilement opposé au substrat.

La ou les couches diélectriques à fonction stabilisantes peuvent donc se trouver au-dessus et/ou en dessous d'au moins une couche fonctionnelle ou de chaque couche fonctionnelle, soit directement à son contact ou soit séparées par une couche de blocage. De préférence, chaque couche fonctionnelle est au-dessus d'un revêtement dont la couche

7

supérieure est une couche diélectrique à fonction stabilisante, de préférence à base d'oxyde de zinc et/ou en-dessous d'un revêtement dont la couche inférieure est une couche diélectrique à fonction stabilisante, de préférence à base d'oxyde de zinc.

Avantageusement, chaque couche diélectrique à fonction barrière est séparée d'une couche fonctionnelle par au moins une couche diélectrique à fonction stabilisante.

Cette couche diélectrique à fonction stabilisante peut avoir une épaisseur d'au moins 5 nm, notamment une épaisseur comprise entre 5 et 25 nm et mieux de 8 à 15 nm.

Un mode de réalisation particulièrement avantageux concerne un substrat comprenant un empilement défini en partant du substrat transparent comprenant :

- un premier revêtement antireflet comprenant au moins une couche diélectrique à fonction barrière et au moins une couche diélectrique à fonction stabilisante,
- une première couche fonctionnelle,
- une première couche de blocage,
- un deuxième revêtement antireflet comprenant au moins un couche diélectrique à fonction stabilisante inférieure, une couche diélectrique à fonction barrière et au moins une couche diélectrique à fonction stabilisante supérieure,
- une deuxième couche fonctionnelle,
- une deuxième couche de blocage,
- un troisième revêtement antireflet comprenant au moins un couche diélectrique à fonction stabilisante inférieure, une couche diélectrique à fonction barrière et au moins une couche diélectrique à fonction stabilisante supérieure,
- une troisième couche fonctionnelle,
- une troisième couche de blocage,
- un quatrième revêtement antireflet comprenant au moins une couche diélectrique à fonction stabilisante et au moins une couche diélectrique à fonction barrière.

L'invention concerne également un vitrage comprenant un substrat transparent tel que défini ci-dessus. Ledit vitrage peut être sous forme de vitrage feuilleté, de vitrage asymétrique ou d'un vitrage multiple du type double vitrage.

Selon des modes de réalisation avantageux, le vitrage selon l'invention présente une transmission lumineuse TL de 45 à 55 % et/ou une sélectivité d'au moins 2,1 et de préférence d'au moins 2,2.

Les substrats transparents selon l'invention sont de préférence en un matériau rigide minéral comme le verre ou choisi parmi les substrats polymériques tels que les substrats en polyéthylène téréphtalate PET, en polyéthylène naphtalate PEN et en polycarbonate.

Le vitrage selon l'invention peut présenter une structure feuilletée. Dans ce cas, le substrat comprend au moins deux substrats rigides du type verre assemblés par au moins une feuille de polymère thermoplastique, afin de présenter une structure de type verre/empilement de couches minces/feuille(s)/verre. Le polymère peut notamment être à base de polyvinylbutyral PVB, éthylène vinylacétate EVA, polyéthylène téréphtalate PET, polychlorure de vinyle PVC. Le vitrage peut alors présenter une structure de type : verre/empilement de couches minces/feuille(s) de polymère/verre. Dans une structure feuilletée, le substrat porteur de l'empilement peut être en contact avec la feuille de polymère.

Le vitrage peut aussi être un vitrage multiple, notamment un double-vitrage. Dans une structure en double vitrage, l'empilement peut être en face 2, lorsque l'on considère que le sens incident de la lumière solaire traverse les faces dans l'ordre croissant de leur numéro. Il est préférable dans une configuration de vitrage multiple que l'empilement soit disposé de manière à être tourné du côté de la lame de gaz intercalaire.

Le vitrage peut aussi être un triple vitrage constitué de trois feuilles de verre séparée deux par deux par une lame de gaz. Dans une structure en triple vitrage, le substrat porteur de l'empilement peut être en face 2 et/ou en face 5, lorsque l'on considère que le sens incident de la lumière solaire traverse les faces dans l'ordre croissant de leur numéro.

L'invention concerne en outre l'utilisation du substrat selon l'invention, pour :

- réaliser un vitrage à haute réflexion énergétique et/ou
- réaliser un vitrage à très basse émissivité et/ou
- réaliser un vitrage chauffant avec un revêtement transparent chauffant par effet Joule,
- réaliser une électrode transparente d'un vitrage électrochrome ou d'un dispositif d'éclairage ou d'un dispositif de visualisation ou d'un panneau photovoltaïque.

L'empilement selon l'invention permet d'obtenir un substrat, trempé ou non trempé, revêtu d'un empilement et qui présente une fois monté en double vitrage :

- une transmission lumineuse d'environ 50 %,
- une réflexion extérieure lumineuse faible,

- un facteur solaire faible et une sélectivité élevée notamment supérieure à 2,2,
- une couleur en réflexion extérieure peu prononcée (avec des valeurs de a* et b* dans le système Lab comprise entre -12 et 2) qui en outre varie peu en fonction de l'angle d'observation,
- une réflexion intérieure faible et avec des couleurs bleu-vert,

Le vitrage peut être bombé et/ou trempé en étant constitué d'un seul substrat, celui muni de l'empilement. Il s'agit alors d'un vitrage dit « monolithique ». Dans le cas où ils sont bombés, notamment en vue de constituer des vitrages pour véhicules, l'empilement de couches minces se trouve de préférence sur une face au moins partiellement non plane.

Le vitrage peut aussi être un vitrage multiple, notamment un double-vitrage, au moins le substrat porteur de l'empilement pouvant être bombé et/ou trempé. Il est préférable dans une configuration de vitrage multiple que l'empilement soit disposé de manière à être tourné du côté de la lame de gaz intercalaire. Dans une structure feuilletée, le substrat porteur de l'empilement peut être en contact avec la feuille de polymère.

Les détails et caractéristiques avantageuses de l'invention ressortent des exemples non limitatifs suivants, illustrés à l'aide des figures ci-jointes :

- la figure 1 illustre un exemple de structure d'un empilement à trois couches métalliques fonctionnelles selon l'invention,
- la figure 2 illustre l'évolution colorimétrique en fonction de la variation de l'épaisseur des surcouches de blocage en transmission (2.a), en réflexion extérieure (2.b) et en réflexion intérieure (2.c),
- la figure 3 illustre les l'évolution colorimétrique en fonction de la variation de l'épaisseur des sous-couches de blocage en transmission (3.a), en réflexion extérieure (3.b) et en réflexion intérieure (3.c).

Les proportions entre les différents éléments ne sont pas respectées afin de faciliter la lecture des figures.

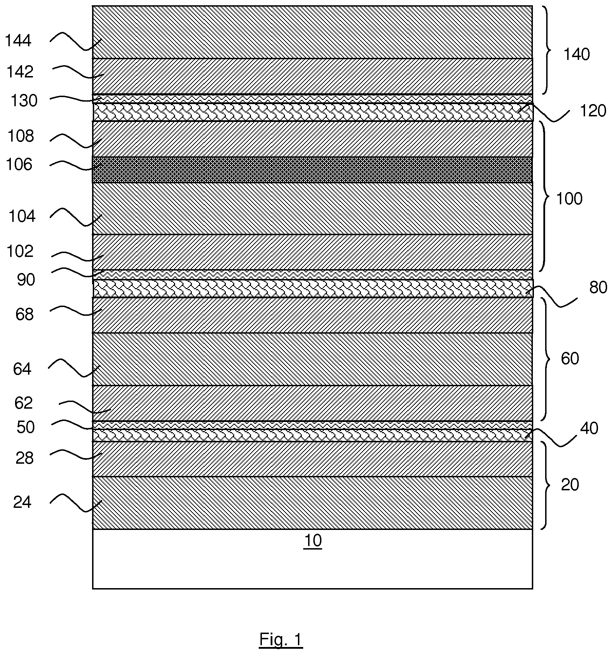

La figure 1 illustre une structure d'empilement à trois couches métalliques fonctionnelles 40, 80, 120, cette structure étant déposée sur un substrat 10 verrier, transparent. Chaque couche fonctionnelle 40, 80, 120 est disposée entre deux revêtements antireflet 20, 60, 100, 140 de telle sorte que :

- la première couche fonctionnelle 40 en partant du substrat est disposée entre les revêtements antireflet 20, 60,
- la deuxième couche fonctionnelle 80 est disposée entre les revêtements antireflet 60, 100 et
- la troisième couche fonctionnelle 120 est disposée entre les revêtements antireflet 100, 140.

Ces revêtements antireflets 20, 60, 100, 140 comportent chacun au moins une couche antireflet diélectrique 24, 28 ; 62, 64, 68 ; 102, 104, 106, 108 ; 142, 144.

Chaque couche fonctionnelle 40, 80, 120 peut être déposée sur un revêtement de blocage ou sous-blocage disposé entre le revêtement antireflet sous-jacent à la couche fonctionnelle et la couche fonctionnelle.

Chaque couche fonctionnelle 40, 80, 120, 160 peut être déposée directement sous un revêtement de blocage ou sur-blocage 50, 90, 130 disposé entre la couche fonctionnelle et le revêtement antireflet sus-jacent à cette couche.

**Exemples**

**I. Préparation des substrats : Empilements, conditions de dépôt et traitements thermiques**

Des empilements de couches minces définis ci-après sont déposés sur des substrats en verre sodo-calcique clair d'une épaisseur de 6 mm, distribués par la société SAINT-GOBAIN.

Pour ces exemples, les conditions de dépôt des couches, qui ont été déposées par pulvérisation (pulvérisation dite « cathodique magnétron »), sont résumées dans le tableau 1.

| Tableau 1 | Cible employée | Pression de dépôt | Gaz | Indice 550 nm |
|---|---|---|---|---|
| $Si_3N_4$ | Si:Al à 92:8 % en poids | $3,2.10^{-3}$ mbar | Ar/(Ar + N2) à 55 % | 2,03 |
| ZnO | Zn:Al à 98:2 % en poids | $1,8.10^{-3}$ mbar | Ar/(Ar + O2) à 63 % | 1,95 |
| SnZnO | Sn(15% at.) : Zn (85% at.) | $3-5.10^{-3}$ mbar | Ar/(Ar + O2) à 75 % | 2,03 |
| NiCr | Ni (80% at.) : Cr(20% at.) | $2-3.10^{-3}$ mbar | Ar à 100 % | - |

(suite)

| Tableau 1 | Cible employée | Pression de dépôt | Gaz | Indice 550 nm |
|---|---|---|---|---|
| Ag | Ag | 3.10-3 mbar | Ar à 100 % | - |
| At. = atomique | | | | |

Le tableau 2 liste les matériaux et les épaisseurs physiques en nanomètres (sauf autre indication) de chaque couche ou revêtement qui constitue les empilements en fonction de leurs positions vis-à-vis du substrat porteur de l'empilement (dernière ligne en bas du tableau). Les numéros « Réf. » correspondent aux références de la figure 1.

Les substrats C.1, C.2, C.3, C.4 et Inv.AT ont subi une trempe thermique dans les conditions suivantes : traitement thermique pendant 5 à 10 minutes à une température comprise entre 600 et 750°C.

Le substrat Inv.BT n'a pas subi de traitement thermique.

| Tableau 2 | Réf. | C.1 | C.2 | C.3 | C.4 | Inv.AT | Inv.BT |
|---|---|---|---|---|---|---|---|
| Revêtement antireflet AR4 | 140 | 26 | 26 | 31 | 28 | 26 | 24 |
| - Si3N4 | 144 | 20 | 20 | 25 | 22 | 20 | 18 |
| - ZnO | 142 | 6 | 6 | 6 | 6 | 6 | 6 |
| Couche blocage NiCr OB3 | 130 | 0,2 | 0,6 | 1 | 0,9 | 0,8 | 0,4 |
| Couche fonctionnelle Ag3 | 120 | 22,3 | 19,7 | 20,3 | 19,5 | 20,7 | 22 |
| Revêtement antireflet AR3 | 100 | 62 | 61 | 67 | 75 | 62 | 61 |
| - ZnO | 108 | 6 | 6 | 6 | 6 | 6 | 6 |
| - SnZnO | 106 | 15 | 15 | 15 | 15 | 15 | 15 |
| - Si3N4 | 104 | 35 | 34 | 40 | 48 | 35 | 34 |
| - ZnO | 102 | 6 | 6 | 6 | 6 | 6 | 6 |
| Couche blocage NiCr OB2 | 90 | 0,3 | 0,4 | 0,4 | 0,8 | 2,5 | 2,8 |
| Couche fonctionnelle Ag2 | 80 | 17,1 | 18,1 | 18,3 | 17,6 | 16,3 | 14,8 |
| Revêtement antireflet AR2 | 60 | 62 | 61 | 65 | 60 | 63 | 59 |
| - ZnO | 68 | 6 | 6 | 6 | 6 | 6 | 6 |
| - Si3N4 | 64 | 50 | 49 | 53 | 48 | 51 | 47 |
| - ZnO | 62 | 6 | 6 | 6 | 6 | 6 | 6 |
| Couche blocage NiCr OB1 | 50 | 0,2 | 1,2 | 1,4 | 2 | 1,6 | 0.4 |
| Couche fonctionnelle Ag1 | 40 | 11,5 | 10,5 | 8,5 | 8 | 8,5 | 9,6 |
| Revêtement antireflet AR1 | 20 | 30 | 36 | 50 | 52 | 56 | 32 |
| - ZnO | 28 | 6 | 6 | 6 | 6 | 6 | 6 |
| - Si3N4 | 24 | 24 | 30 | 44 | 46 | 50 | 26 |
| Substrat verre (mm) | 10 | 6 | 6 | 6 | 6 | 6 | 6 |

Chaque revêtement antireflet 20, 60, 100 sous-jacent à une couche fonctionnelle 40, 80, 120 comporte une dernière couche stabilisante 28, 68, 108 à base d'oxyde de zinc cristallisé, et qui est au contact de la couche fonctionnelle 40, 80, 120 déposée juste au-dessus.

Chaque revêtement antireflet 20, 60, 100, 140 comporte une couche diélectrique à fonction barrière 24, 64, 104, 144, à base de nitrure de silicium, dopé à l'aluminium appelée ici Si3N4 par soucis de simplification bien que la nature réelle de la couche soit en fait du Si3N4:Al comme expliqué ci-avant.

Ces couches à base de nitrure de silicium sont importantes pour obtenir l'effet barrière à l'oxygène.

Le tableau 3 suivant résume les caractéristiques liées aux épaisseurs des couches fonctionnelles, des revêtements antireflets et des couches de blocage.

| Tableau 3 | C.1 | C.2 | C.3 | C.4 | Inv.1AT | Inv.1BT |
|---|---|---|---|---|---|---|
| Rapport épaisseurs couches fonctionnelles | | | | | | |
| - Ag2/Ag1 | 1,49 | 1,72 | 2,15 | 2,20 | 1,92 | 1,54 |
| - Ag3/Ag2 | 1,30 | 1,09 | 1,11 | 1,11 | 1,27 | 1,49 |
| - Ag3/Ag1 | 1,94 | 1,88 | 2,39 | 2,44 | 2,44 | 2,29 |
| Σ épaisseurs des couches fonctionnelles (Ag1 + Ag 2 + Ag3) | 50,90 | 48,30 | 47,10 | 45,10 | 45,5 | 46,4 |
| Rapport épaisseurs revêtements antireflets | | | | | | |
| - AR2/AR1 | 2,07 | 1,69 | 1,30 | 1,15 | 1,13 | 1,84 |
| - AR3/AR2 | 1,00 | 1,00 | 1,03 | 1,25 | 0,98 | 1,03 |
| - AR4/AR3 | 0,42 | 0,43 | 0,46 | 0,37 | 0,42 | 0,39 |
| Rapport épaisseurs couches de blocage | | | | | | |
| - OB2/OB1 | 1,50 | 0,33 | 0,29 | 0,40 | 1,56 | 7,00 |
| - OB2/OB3 | 1,50 | 0,67 | 0,40 | 0,89 | 3,13 | 7,00 |
| - OB1/OB3 | 1,00 | 2,00 | 1,40 | 2,22 | 2,00 | 1,00 |
| Σ épaisseur OB1 + OB2 + OB3 | 0,70 | 2,20 | 2,80 | 3,70 | 4,90 | 3,60 |
| A= OB1 + OB3 | 0,40 | 1,80 | 2,40 | 2,90 | 2,40 | 0,80 |
| B= 1,10 * OB2 | 0,33 | 0,44 | 0,44 | 0,88 | 2,75 | 3,08 |
| A < B | Non | Non | Non | Non | Oui | Oui |

## II. Performances « contrôle solaire » et colorimétrie

Le tableau 4 liste les principales caractéristiques optiques mesurées pour les substrats intégrés dans un double vitrage de structure : verre de 6 mm / espace intercalaire de 16 mm rempli d'argon 90% / verre de 4 mm, l'empilement étant positionné en face 2 (la face 1 du vitrage étant la face la plus à l'extérieur du vitrage, comme habituellement).

Pour ces doubles vitrages,

- TL indique : la transmission lumineuse dans le visible en %, mesurée selon l'illuminant D65 à 10° Observateur ;
- $a^*T$ et $b^*T$ indiquent les couleurs en transmission $a^*$ et $b^*$ dans le système LAB mesurées selon l'illuminant D65 à 10° Observateur et mesurées perpendiculairement au vitrage ;
- RLext indique : la réflexion lumineuse dans le visible en %, mesurée selon l'illuminant D65 à 10° Observateur du côté de la face la plus à l'extérieur, la face 1 ;
- $a^*Rext$ et $b^*Rext$ indiquent les couleurs en réflexion $a^*$ et $b^*$ dans le système LAB mesurées selon l'illuminant D65 à 10° Observateur du côté de la face la plus à l'extérieur et mesurées ainsi perpendiculairement au vitrage ;
- RLint indique : la réflexion lumineuse dans le visible en %, mesurée selon l'illuminant D65 à 10° Observateur du côté de la face la plus à l'intérieur, la face 4 ;
- $a^*Rint$ et $b^*Rint$ indiquent les couleurs en réflexion $a^*$ et $b^*$ dans le système LAB mesurées selon l'illuminant D65 à 10°, observateur du côté de la face la plus à l'intérieur et mesurées ainsi perpendiculairement au vitrage.

| Tableau 4 | C.1 | C.2 | C.3 | C.4 | Inv.1AT | Inv.1BT |
|---|---|---|---|---|---|---|
| Facteurs énergétiques | | | | | | |
| - g | 23,00 | 22,80 | 22,90 | 22,60 | 22,70 | 22,30 |
| - s | 2,18 | 2,16 | 2,21 | 2,20 | 2,22 | 2,22 |
| Couleur en transmission | | | | | | |
| - TL% | 50,2 | 49,2 | 50,6 | 49,7 | 50,5 | 49,7 |
| - a*T | -4,2 | -4,8 | -5,6 | -5,4 | -8,4 | -7,2 |
| - b*T | 4,1 | -0,3 | 1,9 | 2,4 | 0,2 | 0,6 |

(suite)

| Couleur en réflexion | | | | | | |
|---|---|---|---|---|---|---|
| - RLext% | 23,7 | 19,6 | 17,8 | 17,1 | 17,1 | 18,1 |
| - a*Rext | -5,1 | -4,2 | -6,5 | -5,8 | -6,3 | -6,5 |
| - b*Rext | -9.4 | -7.4 | -8,6 | -9,6 | -8,9 | -8,6 |
| - RLint% | 30,5 | 26,3 | 23,7 | 23,2 | 20,3 | 20,6 |
| - a*Rint | -10,3 | -17,4 | -19,7 | -17,1 | -7,7 | -7,1 |
| - b*Rint | -2,5 | -1,7 | -3,7 | -3,6 | -7,1 | -7,1 |

Selon l'invention, il est possible de réaliser un vitrage comprenant un empilement à trois couches fonctionnelles métalliques qui présente une réflexion lumineuse faible, une sélectivité (rapport TL/g) très intéressante, de l'ordre de 2,2 ainsi qu'un excellent compromis pour les couleurs en réflexion intérieure et extérieure et en transmission dans la mesure où toutes les valeurs a* et b* sont comprises entre -9 et 1.

Les propriétés avantageuses concernant la réflexion intérieure permettent, lorsqu'il fait sombre à l'extérieur d'un local éclairé et équipé avec des vitrages de l'invention, de voir ces vitrages colorés de manière agréable et d'éviter les effets miroirs.

Les vitrages selon l'invention offrent donc une bonne protection solaire dans une gamme de transmissions lumineuses particulièrement adaptée pour équiper des bâtiments exposés à un ensoleillement élevé.

L'association des couches métalliques fonctionnelles croissantes et l'utilisation d'une ou plusieurs couches de blocage épaisses autour de la deuxième couche fonctionnelle métallique concourent à l'obtention de ces meilleurs résultats : réflexion lumineuse basse et facteur solaire plus bas, afin de pouvoir obtenir une sélectivité élevée avec en une couleur en réflexion, tant de l'extérieur que de l'intérieur, neutre, dans les bleu-vert.

### III. Influence de la présence et de l'épaisseur des couches de blocage concentrées autour de la deuxième couche fonctionnelle

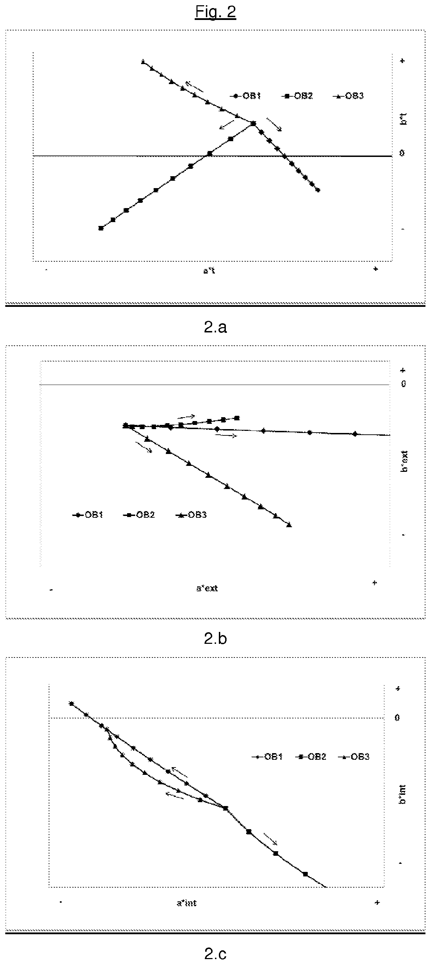

Les figures 2.a, 2.b et 2.c illustrent la tendance de l'évolution colorimétrique en fonction de la variation de l'épaisseur des surcouches de blocage respectivement en transmission, en réflexion extérieure et en réflexion intérieure.

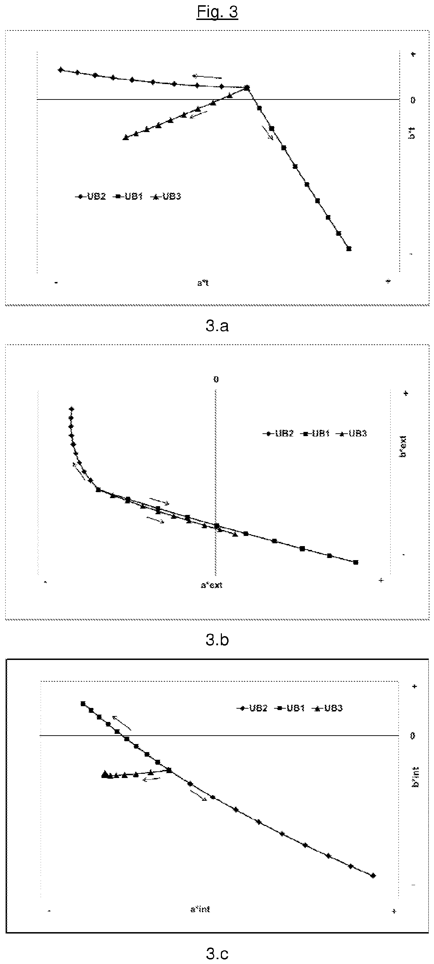

Les figures 3.a, 3.b et 3.c illustrent la tendance de l'évolution colorimétrique en fonction de la variation de l'épaisseur des sous-couches de blocage respectivement en transmission, en réflexion extérieure et en réflexion intérieure.

Les flèches représentent le sens de l'augmentation croissante des épaisseurs des surcouches et des sous-couches de blocage.

A partir d'un substrat de référence comprenant trois surcouches de blocage (OB1, OB2, OB3) respectivement situées au-dessus de chacune des trois couches fonctionnelles, on a fait varier :

- l'épaisseur OB1 de la première surcouche de blocage située au-dessus de la première couche fonctionnelle (en gardant constante toutes les autres épaisseurs de l'empilement dont OB2 et OB3),
- l'épaisseur OB2 de la deuxième surcouche de blocage située au-dessus de la deuxième couche fonctionnelle (en gardant constante toutes les autres épaisseurs de l'empilement dont OB1 et OB3),
- l'épaisseur OB3 de la troisième couche de blocage située au-dessus de la troisième couche fonctionnelle (en gardant constante toutes les autres épaisseurs de l'empilement dont OB1 et OB2).

A partir d'un substrat de référence comprenant trois sous-couches de blocage (UB1, UB2, UB3) respectivement situées au-dessous de chacune des trois couches fonctionnelles, on a fait varier :

- l'épaisseur UB1 de la première sous-couche de blocage située au-dessus de la première couche fonctionnelle (en gardant constante toutes les autres épaisseurs de l'empilement dont UB2 et UB3),
- l'épaisseur UB2 de la deuxième sous-couche de blocage située au-dessus de la deuxième couche fonctionnelle (en gardant constante toutes les autres épaisseurs de l'empilement dont UB1 et UB3),
- l'épaisseur UB3 de la troisième sous-couche de blocage située au-dessus de la troisième couche fonctionnelle (en gardant constante toutes les autres épaisseurs de l'empilement dont UB1 et UB2).

Les exemples comparatifs C.1 à C.4 présentent des valeurs a* en réflexion intérieure trop faibles et notamment inférieures à -10 (voir tableau 4).

Or, l'analyse des courbes colorimétriques et plus particulièrement des courbes 2.c et 3.c montrent que seule l'augmentation en épaisseur de la deuxième couche de blocage située au-dessus ou au-dessus de la deuxième couche fonctionnelle permet d'augmenter les valeurs de a*.

Par conséquent, la concentration des couches de blocage au contact de la deuxième couche fonctionnelle permet d'obtenir les propriétés de réflexion interne intéressantes en termes de colorimétrie.

De plus, de manière surprenante on obtient également une réflexion lumineuse RI intérieure plus faible.

Enfin, les couleurs en réflexion intérieure satisfaisantes sont obtenues sans nuire au couleur en transmission et en réflexion extérieure ce qui n'est absolument pas prévisible. En effet, les valeurs de a* et b* sont toutes comprises entre -9 et 1.

Or, les figures 2.a, 2.b et 3.a, 3.b illustrant la tendance de l'évolution colorimétrique en fonction de la variation de l'épaisseur des sous-couches et surcouche de blocage en transmission et en réflexion extérieure ne laissent absolument pas présager l'excellent compromis obtenu selon l'invention en termes de couleur en transmission, en réflexion intérieure et extérieure, de performance de contrôle solaire et de réflexion lumineuse.

## Revendications

1. Substrat transparent (10) comprenant un empilement de couches minces comportant successivement à partir du substrat une alternance de trois couches métalliques fonctionnelles (40, 80, 120), notamment de couches fonctionnelles à base d'argent ou d'alliage métallique contenant de l'argent, et de quatre revêtements antireflets (20, 60, 100, 140), chaque revêtement antireflet comportant au moins une couche diélectrique, de manière à ce que chaque couche métallique fonctionnelle (40, 80, 120) soit disposée entre deux revêtements antireflets (20, 60, 100, 140), **caractérisé en ce que** :

   - les épaisseurs des couches métalliques fonctionnelles (40, 80, 120) en partant du substrat augmentent en fonction de l'éloignement du substrat,
   - la seconde couche métallique fonctionnelle (80) est directement au contact d'au moins une couche de blocage, appelée deuxième couche de blocage, choisie parmi une sous-couche de blocage et une surcouche de blocage, respectivement appelées deuxième sous-couche de blocage et deuxième surcouche de blocage,
   - la deuxième sous-couche de blocage et/ou la deuxième surcouche de blocage présente une épaisseur supérieure à 1 nm,
   - l'empilement comprend éventuellement au moins une couche de blocage choisie parmi une première couche de blocage située au contact de la première couche métallique fonctionnelle (40) et une troisième couche de blocage située au contact de la troisième couche métallique fonctionnelle (120),
   - les première, deuxième et/ou troisième couches de blocage présentent respectivement des épaisseurs CB1, CB2, CB3 satisfaisant l'équation suivante : $CB1 + CB3 < 1,1\ CB2$ avec au moins l'épaisseur CB2 non nulle,
   - les couches de blocage sont choisies parmi les couches métalliques à base d'un métal ou d'un alliage métallique, les couches de nitrure métallique et les couches d'oxynitrure métallique, de préférence, d'un ou plusieurs éléments choisis parmi le titane, le nickel, le chrome et le niobium.

2. Substrat selon l'une des revendications précédentes, **caractérisé en ce que** chaque couche métallique fonctionnelle (40, 80, 120) est au contact d'au moins une couche de blocage.

3. Substrat selon l'une des revendications précédentes, **caractérisé en ce que** chaque couche métallique fonctionnelle (40, 80, 120) est au contact d'une surcouche de blocage dénommée en fonction de la position par rapport au substrat, première, deuxième et troisième surcouche de blocage.

4. Substrat selon l'une des revendications précédentes, **caractérisé en ce que** les couches de blocage correspondant à la première, la deuxième, et la troisième couche de blocage définies en partant du substrat satisfont les caractéristiques suivantes :

   - le rapport de l'épaisseur de la deuxième couche de blocage CB2 sur l'épaisseur de la première couche de blocage CB1 est supérieur à 1,10, de préférence compris entre 1,10 et 10, et mieux compris entre 1,10 et 2,00, de préférence entre 1,40 et 1,70 en incluant ces valeurs,
   - le rapport de l'épaisseur de la deuxième couche de blocage CB2 sur l'épaisseur de la troisième couche de blocage CB3 est supérieur à 1,10, de préférence compris entre 2,00 et 10, de préférence entre 2,90 et 3,20 en incluant ces valeurs.

**5.** Substrat selon l'une des revendications précédentes, **caractérisé en ce que** les couches de blocage sont choisies parmi les couches de Ti, TiN, Nb, NbN, Ni, NiN, Cr, CrN, NiCr, NiCrN.

**6.** Substrat selon l'une des revendications précédentes, **caractérisé en ce que** l'épaisseur de la seconde couche de blocage CB2 est comprise de 1,5 à 3,5 nm.

**7.** Substrat selon l'une des revendications précédentes, **caractérisé en ce que** l'épaisseur totale des couches de blocages est comprise entre 3 et 7 nm en incluant ces valeurs, de préférence entre 3,5 et 5 nm, et mieux 4 et 5 nm.

**8.** Substrat selon l'une des revendications précédentes, **caractérisé en ce que** les trois couches métalliques fonctionnelles correspondant à la première, la deuxième, et la troisième couche fonctionnelle métallique définies en partant du substrat et satisfont les caractéristiques suivantes :

- le rapport de l'épaisseur de la deuxième couche métallique (80) sur l'épaisseur de la première couche métallique fonctionnelle (40) est compris entre 1,50 et 2,20, de préférence entre 1,80 et 2,20 en incluant ces valeurs,
- le rapport de l'épaisseur de la troisième couche métallique (120) sur l'épaisseur de la deuxième couche métallique fonctionnelle (80) est compris entre 1,10 et 1,60, de préférence 1,10 et 1,55 en incluant ces valeurs.

**9.** Substrat selon l'une des revendications précédentes, **caractérisé en ce que** les revêtements antireflets correspondant au premier, au deuxième et au troisième revêtement antireflet définis en partant du substrat présentent un rapport de l'épaisseur d'un revêtement sur l'épaisseur du précédent qui est compris entre 0,90 et 1,20 en incluant ces valeurs.

**10.** Substrat selon l'une des revendications précédentes, **caractérisé en ce que** les revêtements antireflets comprennent au moins une couche diélectrique à base d'oxyde ou de nitrure d'un ou plusieurs éléments choisis parmi le silicium, l'aluminium, l'étain, le zinc.

**11.** Substrat selon l'une quelconque des revendications précédentes, **caractérisé en ce que** chaque des revêtements antireflet comporte au moins une couche diélectrique à fonction barrière à base de composés de silicium choisis parmi les oxydes tels que $SiO_2$, les nitrures de silicium $Si_3N_4$ et les oxynitures $SiO_xN_y$, éventuellement dopé à l'aide d'au moins un autre élément, comme l'aluminium.

**12.** Substrat selon l'une quelconque des revendications précédente, **caractérisé en ce que** chaque des revêtements antireflet comporte au moins une couche diélectrique à fonction stabilisante à base d'oxyde cristallisé, notamment à base d'oxyde de zinc, éventuellement dopé à l'aide d'au moins un autre élément, comme l'aluminium.

**13.** Substrat selon l'une quelconque des revendications précédentes **caractérisé en ce qu'**il comprend un empilement défini en partant du substrat transparent comprenant :

- un premier revêtement antireflet comprenant au moins une couche diélectrique à fonction barrière et au moins une couche diélectrique à fonction stabilisante,
- une première couche fonctionnelle,
- une première couche de blocage,
- un deuxième revêtement antireflet comprenant au moins un couche diélectrique à fonction stabilisante inférieure, une couche diélectrique à fonction barrière et au moins une couche diélectrique à fonction stabilisante supérieure,
- une deuxième couche fonctionnelle,
- une deuxième couche de blocage,
- un troisième revêtement antireflet comprenant au moins un couche diélectrique à fonction stabilisante inférieure, une couche diélectrique à fonction barrière et au moins une couche diélectrique à fonction stabilisante supérieure,
- une troisième couche fonctionnelle,
- une troisième couche de blocage,
- un quatrième revêtement antireflet comprenant au moins une couche diélectrique à fonction stabilisante et au moins une couche diélectrique à fonction barrière.

**14.** Vitrage comprenant un substrat transparent selon l'une quelconque des revendications précédentes, caractérisé en qu'il est sous forme de vitrage feuilleté, de vitrage asymétrique ou d'un vitrage multiple du type double vitrage.

**EP 2 991 944 B1**

**Patentansprüche**

1. Transparentes Substrat (10) mit einem Stapel dünner Schichten, der nacheinander ausgehend vom Substrat eine Wechselfolge von drei metallischen Funktionsschichten (40, 80, 120), insbesondere von Funktionsschichten auf der Basis von Silber oder einer silberhaltigen Metalllegierung, und von vier Antireflexbeschichtungen (20, 60, 100, 140) aufweist, wobei jede Antireflexbeschichtung mindestens eine dielektrische Schicht aufweist, so dass jede metallische Funktionsschicht (40, 80, 120) zwischen zwei Antireflexbeschichtungen (20, 60, 100, 140) angeordnet ist, **dadurch gekennzeichnet, dass**:

   - die Dicken der metallischen Funktionsschichten (40, 80, 120) vom Substrat aus in Abhängigkeit von der Entfernung vom Substrat zunehmen,
   - die zweite metallische Funktionsschicht (80) direkt in Kontakt mit mindestens einer Blockerschicht, zweite Blockerschicht genannt, steht, die unter einer Blocker-Unterschicht und einer Blocker-Deckschicht gewählt ist, die zweite Blocker-Unterschicht bzw. zweite Blocker-Deckschicht genannt werden,
   - die zweite Blocker-Unterschicht und/oder die zweite Blocker-Deckschicht eine Dicke von mehr als 1 nm aufweist,
   - der Stapel gegebenenfalls mindestens eine Blockerschicht umfasst, die unter einer ersten Blockerschicht, die in Kontakt mit der ersten metallischen Funktionsschicht (40) steht, und einer dritten Blockerschicht, die in Kontakt mit der dritten metallischen Funktionsschicht (120) steht, gewählt ist,
   - die erste, zweite und/oder dritte Blockerschicht jeweils Dicken CB1, CB2, CB3 aufweisen, die die folgende Gleichung erfüllen: $CB1 + CB3 < 1{,}1\ CB2$, wobei mindestens die Dicke CB2 ungleich null ist,
   - die Blockerschichten unter den metallischen Schichten auf der Basis eines Metalls oder einer Metalllegierung, den Metallnitridschichten und den Metalloxynitridschichten gewählt sind, bevorzugt von einem oder mehreren Elementen, die unter Titan, Nickel, Chrom und Niob gewählt sind.

2. Substrat nach einem der vorhergehenden Ansprüche, **dadurch gekennzeichnet, dass** jede metallische Funktionsschicht (40, 80, 120) mit mindestens einer Blockerschicht in Kontakt steht.

3. Substrat nach einem der vorhergehenden Ansprüche, **dadurch gekennzeichnet, dass** jede metallische Funktionsschicht (40, 80, 120) mit einer Blocker-Deckschicht in Kontakt steht, die in Abhängigkeit von der Lage im Verhältnis zum Substrat als erste, zweite und dritte Blocker-Deckschicht bezeichnet wird.

4. Substrat nach einem der vorhergehenden Ansprüche, **dadurch gekennzeichnet, dass** die Blockerschichten, die der vom Substrat aus definierten ersten, zweiten und dritten Blockerschicht entsprechen, die folgenden Merkmale erfüllen:

   - das Verhältnis der Dicke der zweiten Blockerschicht CB2 zur Dicke der ersten Blockerschicht CB1 beträgt mehr als 1,10, bevorzugt zwischen 1,10 und 10 und besser zwischen 1,10 und 2,00, bevorzugt zwischen 1,40 und 1,70 einschließlich dieser Werte,
   - das Verhältnis der Dicke der zweiten Blockerschicht CB2 zur Dicke der dritten Blockerschicht CB3 beträgt mehr als 1,10, bevorzugt zwischen 2,00 und 10, bevorzugt zwischen 2,90 und 3,20 einschließlich dieser Werte.

5. Substrat nach einem der vorhergehenden Ansprüche, **dadurch gekennzeichnet, dass** die Blockerschichten unter den Schichten aus Ti, TiN, Nb, NbN, Ni, NiN, Cr, CrN, NiCr, NiCrN gewählt sind.

6. Substrat nach einem der vorhergehenden Ansprüche, **dadurch gekennzeichnet, dass** die Dicke der zweiten Blockerschicht CB2 von 1,5 bis 3,5 nm beträgt.

7. Substrat nach einem der vorhergehenden Ansprüche, **dadurch gekennzeichnet, dass** die Gesamtdicke der Blockerschichten zwischen 3 und 7 nm einschließlich dieser Werte, bevorzugt zwischen 3,5 und 5 nm und besser 4 und 5 nm beträgt.

8. Substrat nach einem der vorhergehenden Ansprüche, **dadurch gekennzeichnet, dass** die drei metallischen Funktionsschichten, die der vom Substrat aus definierten ersten, zweiten und dritten metallischen Funktionsschicht entsprechen, die folgenden Merkmale erfüllen:

   - das Verhältnis der Dicke der zweiten Metallschicht (80) zur Dicke der ersten metallischen Funktionsschicht (40) beträgt zwischen 1,50 und 2,20, bevorzugt zwischen 1,80 und 2,20 einschließlich dieser Werte,

15

- das Verhältnis der Dicke der dritten Metallschicht (120) zur Dicke der zweiten metallischen Funktionsschicht (80) beträgt zwischen 1,10 und 1,60, bevorzugt 1,10 und 1,55 einschließlich dieser Werte.

9. Substrat nach einem der vorhergehenden Ansprüche, **dadurch gekennzeichnet, dass** die Antireflexbeschichtungen, die der vom Substrat aus definierten ersten, zweiten und dritten Antireflexionsbeschichtung entsprechen, ein Verhältnis der Dicke einer Beschichtung zur Dicke der vorhergehenden aufweisen, das zwischen 0,90 und 1,20 einschließlich dieser Werte beträgt.

10. Substrat nach einem der vorhergehenden Ansprüche, **dadurch gekennzeichnet, dass** die Antireflexbeschichtungen mindestens eine dielektrische Schicht auf der Basis eines Oxids oder Nitrids eines oder mehrerer Elemente umfassen, die unter Silicium, Aluminium, Zinn und Zink gewählt sind.

11. Substrat nach einem der vorhergehenden Ansprüche, **dadurch gekennzeichnet, dass** jede der Antireflexbeschichtungen mindestens eine dielektrische Schicht mit Sperrfunktion auf der Basis von Siliciumverbindungen, die unter den Oxiden wie $SiO_2$, den Siliciumnitriden $Si_3N_4$ und den Oxynitriden $SiO_xN_y$ gewählt sind, gegebenenfalls mithilfe mindestens eines weiteren Elements wie Aluminium dotiert, aufweist.

12. Substrat nach einem der vorhergehenden Ansprüche, **dadurch gekennzeichnet, dass** jede der Antireflexbeschichtungen mindestens eine dielektrische Schicht mit stabilisierender Funktion auf der Basis von kristallisiertem Oxid, insbesondere auf der Basis von Zinkoxid, gegebenenfalls mithilfe mindestens eines weiteren Elements wie Aluminium dotiert, aufweist.

13. Substrat nach einem der vorhergehenden Ansprüche, **dadurch gekennzeichnet, dass** es einen vom transparenten Substrat aus definierten Stapel umfasst, der umfasst:

    - eine erste Antireflexbeschichtung, die mindestens eine dielektrische Schicht mit Sperrfunktion und mindestens eine dielektrische Schicht mit stabilisierender Funktion umfasst,
    - eine erste Funktionsschicht,
    - eine erste Blockerschicht,
    - eine zweite Antireflexbeschichtung, die mindestens eine untere dielektrische Schicht mit stabilisierender Funktion, eine dielektrische Schicht mit Sperrfunktion und mindestens eine obere dielektrische Schicht mit einer stabilisierender Funktion umfasst,
    - eine zweite Funktionsschicht,
    - eine zweite Blockerschicht,
    - eine dritte Antireflexbeschichtung, die mindestens eine untere dielektrische Schicht mit stabilisierender Funktion, eine dielektrische Schicht mit Sperrfunktion und mindestens eine obere dielektrische Schicht mit stabilisierender Funktion umfasst,
    - eine dritte Funktionsschicht,
    - eine dritte Blockerschicht,
    - eine vierte Antireflexbeschichtung, die mindestens eine dielektrische Schicht mit stabilisierender Funktion und mindestens eine dielektrische Schicht mit Sperrfunktion umfasst.

14. Verglasung mit einem transparenten Substrat nach einem der vorhergehenden Ansprüche, **dadurch gekennzeichnet, dass** sie in Form einer Verbundverglasung, einer asymmetrischen Verglasung oder einer Mehrfachverglasung von der Art einer Doppelverglasung vorliegt.

## Claims

1. A transparent substrate (10) comprising a stack of thin layers successively comprising, starting from the substrate, an alternation of three metallic functional layers (40, 80, 120), in particular of functional layers based on silver or on silver-comprising metal alloy, and of four antireflective coatings (20, 60, 100, 140), each antireflective coating comprising at least one dielectric layer, so that each metallic functional layer (40, 80, 120) is positioned between two antireflective coatings (20, 60, 100, 140), **characterized in that**:

    - the thicknesses of the metallic functional layers (40, 80, 120), starting from the substrate, increase as a function of the distance from the substrate,
    - the second metallic functional layer (80) is directly in contact with at least one blocking layer, referred to as second blocking layer, chosen from a blocking underlayer and a blocking overlayer, respectively referred to as second blocking underlayer and second blocking overlayer,

- the second blocking underlayer and/or the second blocking overlayer exhibits a thickness of greater than 1 nm,
- the stack optionally comprises at least one blocking layer chosen from a first blocking layer located in contact with the first metallic functional layer (40) and a third blocking layer located in contact with the third metallic functional layer (120),
- the first, second and/or third blocking layers respectively exhibit thicknesses CB1, CB2, CB3 satisfying the following equation: CB1 + CB3 < 1.1 CB2, with at least the thickness CB2 nonzero,
- the blocking layers are chosen from metallic layers based on a metal or on a metal alloy, metal nitride layers and metal oxynitride layers, preferably of one or more elements chosen from titanium, nickel, chromium and niobium.

2. The substrate as claimed in one of the preceding claims, **characterized in that** each metallic functional layer (40, 80, 120) is in contact with at least one blocking layer.

3. The substrate as claimed in either of the preceding claims, **characterized in that** each metallic functional layer (40, 80, 120) is in contact with a blocking overlayer denoted, as a function of the position with respect to the substrate, first, second and third blocking overlayer.

4. The substrate as claimed in one of the preceding claims, **characterized in that** the blocking layers corresponding to the first, the second and the third blocking layer defined starting from the substrate satisfy the following characteristics:

    - the ratio of the thickness of the second blocking layer CB2 to the thickness of the first blocking layer CB1 is greater than 1.10, preferably of between 1.10 and 10 and better still of between 1.10 and 2.00, preferably between 1.40 and 1.70, including these values,
    - the ratio of the thickness of the second blocking layer CB2 to the thickness of the third blocking layer CB3 is greater than 1.10, preferably of between 2.00 and 10, preferably between 2.90 and 3.20, including these values.

5. The substrate as claimed in one of the preceding claims, **characterized in that** the blocking layers are chosen from Ti, TiN, Nb, NbN, Ni, NiN, Cr, CrN, NiCr or NiCrN layers.

6. The substrate as claimed in one of the preceding claims, **characterized in that** the thickness of the second blocking layer CB2 is of from 1.5 to 3.5 nm.

7. The substrate as claimed in one of the preceding claims, **characterized in that** the total thickness of the blocking layers is of between 3 and 7 nm, including these values, preferably between 3.5 and 5 nm and better still 4 and 5 nm.

8. The substrate as claimed in one of the preceding claims, **characterized in that** the three metallic functional layers corresponding to the first, the second and the third metallic functional layer defined starting from the substrate satisfy the following characteristics:

    - the ratio of the thickness of the second metallic layer (80) to the thickness of the first metallic functional layer (40) is between 1.50 and 2.20, preferably between 1.80 and 2.20, including these values,
    - the ratio of the thickness of the third metallic layer (120) to the thickness of the second metallic functional layer (80) is between 1.10 and 1.60, preferably 1.10 and 1.55, including these values.

9. The substrate as claimed in one of the preceding claims, **characterized in that** the antireflective coatings corresponding to the first, to the second and to the third antireflective coating defined starting from the substrate exhibit a ratio of the thickness of a coating to the thickness of the preceding one which is of between 0.90 and 1.20, including these values.

10. The substrate as claimed in one of the preceding claims, **characterized in that** the antireflective coatings comprise at least one dielectric layer based on oxide or on nitride of one or more elements chosen from silicon, aluminum, tin or zinc.

11. The substrate as claimed in any one of the preceding claims, **characterized in that** each of the antireflective coatings comprises at least one dielectric layer having a barrier function based on silicon compounds chosen from oxides,

such as $SiO_2$, silicon nitrides $Si_3N_4$ and oxynitrides $SiO_xN_y$, optionally doped using at least one other element, such as aluminum.

12. The substrate as claimed in any one of the preceding claims, **characterized in that** each of the antireflective coatings comprises at least one dielectric layer having a stabilizing function based on crystalline oxide, in particular based on zinc oxide, optionally doped using at least one other element, such as aluminum.

13. The substrate as claimed in any one of the preceding claims, **characterized in that** it comprises a stack, defined starting from the transparent substrate, comprising:

   - a first antireflective coating comprising at least one dielectric layer having a barrier function and at least one dielectric layer having a stabilizing function,
   - a first functional layer,
   - a first blocking layer,
   - a second antireflective coating comprising at least one lower dielectric layer having a stabilizing function, a dielectric layer having a barrier function and at least one upper dielectric layer having a stabilizing function,
   - a second functional layer,
   - a second blocking layer,
   - a third antireflective coating comprising at least one lower dielectric layer having a stabilizing function, a dielectric layer having a barrier function and at least one upper dielectric layer having a stabilizing function,
   - a third functional layer,
   - a third blocking layer,
   - a fourth antireflective coating comprising at least one dielectric layer having a stabilizing function and at least one dielectric layer having a barrier function.

14. A glazing comprising a transparent substrate as claimed in any one of the preceding claims, **characterized in that** it is in the form of a laminated glazing, of an asymmetrical glazing or of a multiple glazing of the double glazing type.

Fig. 1

Fig. 2

2.a

2.b

2.c

<u>Fig. 3</u>

3.a

3.b

3.c

**EP 2 991 944 B1**

## RÉFÉRENCES CITÉES DANS LA DESCRIPTION

### Documents brevets cités dans la description

- US 20070081228 A
- EP 0645352 A